# FASCICULE DE BREVET EUROPEEN

(11) **EP 3 221 946 B1**
(45) Date de publication et mention de la délivrance du brevet: **09.01.2019**
(21) Numéro de dépôt: 15805572.3
(22) Date de dépôt: 03.11.2015
(51) Int. Cl.: H02J 7/24, H04L 5/00, H04B 3/54, H04L 27/04, H04L 27/12, H02J 13/00, A01G 3/037

(54) **SYSTÈME ET PROCÉDÉ DE COMMUNICATION BIDIRECTIONNELLE ET SIMULTANÉE**
SYSTEM UND VERFAHREN ZUR BIDIREKTIONALEN UND GLEICHZEITIGEN KOMMUNIKATION
SYSTEM AND METHOD FOR BIDIRECTIONAL AND SIMULTANEOUS COMMUNICATION

(30) Priorité: 19.11.2014 FR 1461184
(43) Date de publication de la demande: 27.09.2017
(73) Titulaire: Pellenc, 84120 Pertuis (FR)
(72) Inventeur: PELLENC, Roger, 84120 Pertuis (FR); LOPEZ, Bernard, 84240 La Tour d'Aigues (FR)
(74) Mandataire: Weber, Etienne Nicolas
(86) Numéro de dépôt international: PCT/FR2015/052965
(87) Numéro de publication internationale: WO 2016/079397

(56) Documents cités:
- EP-A1- 0 783 994
- FR-A1- 2 940 561

## Description

### Domaine technique

La présente invention concerne un système et un procédé de communication bidirectionnelle et simultanée par échange de signaux entre deux équipements à liaison filaire. L'invention trouve des applications notamment pour des outils, et en particulier des outils portatifs autonomes à moteur électrique pourvus d'une source d'alimentation électrique distante. Dans ce cas l'outil constitue l'un des équipements et l'unité d'alimentation le second équipement.

L'invention peut être mise en oeuvre pour des outils électriques portables dans différents domaines d'application et en particulier les domaines du bâtiment, de l'entretien des espaces verts, de la viticulture, de l'arboriculture et de l'horticulture. L'invention est particulièrement utile pour des outils professionnels pourvus d'alimentations électriques de puissance élevée et de forte autonomie. Une application très particulière de l'invention concerne les sécateurs électriques à main et à alimentation distante, pour des travaux de taille ou de récolte.

L'invention trouve enfin une application pour des unités d'alimentation polyvalentes susceptibles d'être connectées à différents outils électriques.

### Etat de la technique antérieure

On connait des systèmes de communication bidirectionnelle et simultanée normalisés utilisant des câbles de liaison électrique comme le réseau téléphonique, et des systèmes utilisés dans l'informatique ou l'industrie comme le RS 232, l'USB ou le CAN. La communication simultanée de ces différents systèmes est transmise par l'intermédiaire d'au moins deux fils du câble électrique de liaison.

Bien que l'invention puisse être appliquée de manière générale à tout système de communication bidirectionnelle et simultanée, l'état de la technique est décrit en référence à son application principale dans le domaine de l'outillage électrique, où les besoins de communication entre l'outil électrique et sa source d'alimentation sont en pleine croissance, et notamment dans les outils électriques possédant une source d'alimentation distante.

On entend par source d'alimentation distante une source d'alimentation qui n'est située ni dans le corps de l'outil ni dans un boîtier directement connecté à l'outil. La source d'alimentation distante est reliée à l'outil au moyen d'un câble électrique. Typiquement les outils à alimentation électrique distante disposent d'une unité d'alimentation susceptible d'être portée à la ceinture ou au dos. La longueur du câble peut être variable mais est suffisante pour relier l'unité d'alimentation à un outil tenu à la main.

On connait par le document EP 0 783 994 un système de communication bidirectionnel pour automobile alliant une transmission de données par modulation d'amplitude et de largeur d'impulsion.

On connait également, de par les documents FR2862558 et FR2033742, des outils portatifs autonomes, pourvus d'une source d'alimentation électrique distante.

Un câble électrique à plusieurs fils conducteurs relie l'unité d'alimentation électrique et l'outil. Le câble comprend des fils électriques pour alimenter un moteur électrique de l'outil. Il s'agit par exemple de trois fils pour l'alimentation électrique d'un moteur électrique triphasé. Le câble peut aussi comporter des fils électriques pour alimenter une carte électronique ou des composants électroniques de l'outil. Enfin, le câble peut comporter un ou plusieurs fils pour l'échange d'informations entre l'outil et l'unité d'alimentation en énergie.

Les outils, tout comme les unités d'alimentation électrique, peuvent être pourvus de cartes électroniques pour la gestion des fonctions de l'outil, pour la gestion des commandes d'un utilisateur, pour la gestion de l'utilisation de l'énergie, pour l'identification mutuelle des équipements connectés, etc. Pour une bonne coordination du fonctionnement de l'outil et de la batterie, ces cartes électroniques comportent des interfaces de communication pour échanger entre elles des informations, généralement sous la forme de données numériques.

L'évolution de l'outillage, et son perfectionnement, s'accompagne d'une tendance à l'augmentation du volume des données échangées.

Un facteur limitant pour l'échange de données est lié au nombre de fils ou de conducteurs disponibles dans le câble. Or, le câble comprend préférentiellement un nombre restreint de fils, de manière à conserver une bonne flexibilité et une fiabilité élevée. Ainsi, le nombre de fils pouvant être alloués à un échange de signaux est réduit. Il peut s'agir notamment d'un fil unique. Ce fil unique ne permet toutefois qu'une communication séquentielle et non simultanée dans l'état de l'art.

Une deuxième difficulté existe dans la nécessité, tout au moins pour certains outils, de pouvoir transmettre de manière simultanée des informations de l'outil vers l'unité d'alimentation et de l'unité d'alimentation vers l'outil. Ceci peut être particulièrement important pour des données de sécurité devant être transmises en priorité.

Enfin, une difficulté est liée à la perturbation électromagnétique des signaux transmis. Une telle perturbation est un problème susceptible d'être rencontré quel que soit le domaine d'application de l'invention. Toutefois, il s'agit d'un problème critique dans le domaine des outils électriques en raison de la perturbation inhérente à la commutation des phases du moteur et plus généralement à son fonctionnement.

Plusieurs types de liaisons peuvent être envisagés pour la communication de l'information sur un unique fil conducteur. La liaison analogique est la plus ancienne connue pour transmettre des informations de façon simple. Elle peut être particulièrement robuste et peu sensible aux perturbations électromagnétiques mais uniquement dans le cas de faible bande passante, les perturbations pouvant alors être aisément filtrées sans altération importante de l'information transmise. Toutefois, la liaison analogique est inadaptée d'une part à la transmission d'informations avec bande passante élevée et présence de perturbations électromagnétiques, mais aussi à la transmission simultanée d'informations de l'outil vers l'unité d'alimentation et réciproquement.

Une liaison numérique série, par exemple de type UART (Universal Asynchronous Receiver Transmitter) est communément utilisée par exemple dans le domaine des ordinateurs individuels pour transmettre les informations bit par bit sur une ligne du port série de l'ordinateur. Elle a l'avantage, par rapport à une communication analogique, de pouvoir transmettre plusieurs informations de nature indépendantes mais elle n'autorise toutefois pas la communication bidirectionnelle simultanée sur un unique fil conducteur.

Un autre type de liaison série connue sous la désignation PWM (Pulse Width Modulation) ou MLI (Modulation de Largeur d'Impulsion) a pour principe de générer un signal logique, à fréquence fixe, mais dont le rapport cyclique est contrôlé numériquement selon la valeur analogique que l'on souhaite transmettre. Elle conjugue la simplicité de la liaison analogique, tout en ayant une bonne robustesse par rapport aux perturbations électromagnétiques en cas de bande passante élevée. Toutefois, elle ne permet pas la précision d'une liaison série numérique de type UART compte tenu de son principe même de fonctionnement. De manière semblable à la liaison de type UART ou analogique, la liaison PWM ne permet pas non plus la communication bidirectionnelle simultanée sur un unique fil conducteur.

### Exposé de l'invention

La présente invention vise à proposer un système et un procédé de communication bidirectionnels qui ne présentent pas les limitations des systèmes évoqués ci-dessus. En particulier, l'invention vise à proposer une liaison de communication avec une bonne immunité aux perturbations électromagnétiques, capable de transmettre des volumes importants de données, et capable de transmettre simultanément des données entre deux équipements.

Enfin l'invention a pour but de proposer un tel système adapté à la communication entre un outil électrique portable et une unité d'alimentation distante associée à l'outil. En particulier un but est de proposer un système adapté à la communication sur une ligne de transmission de données à conducteur unique.

Pour atteindre ces buts, ainsi que d'autres qui apparaissent dans la description, l'invention propose système de communication bidirectionnel entre un premier équipement et un deuxième équipement relié au premier équipement par une ligne de transmission à conducteur unique, comprenant des moyens de transmission de données du premier équipement vers le deuxième équipement par une modulation de la largeur d'impulsions d'un signal de transmission, émis sur la ligne de transmission, et des moyens de transmission de données du deuxième équipement vers le premier équipement par une modulation en amplitude dudit signal de transmission, dans lequel les moyens de transmission de données du premier équipement vers le deuxième équipement comportent un premier modulateur apte à générer le signal de transmission, modulé en largeur d'impulsion, en fonction d'au moins une première donnée numérique, le premier modulateur étant situé dans le premier équipement. Conformément à l'invention, le premier modulateur est apte à coder une première donnée numérique par modulation de la largeur de l'un parmi un état haut et un état bas du signal de transmission, et de coder une deuxième donnée numérique par modulation d'une période, respectivement une fréquence, du signal de transmission.

On entend par ligne de transmission à conducteur unique une ligne de transmission dans laquelle un unique conducteur est utilisé pour une communication qui peut être simultanée et bidirectionnelle entre le premier et le deuxième équipement, et dans laquelle le conducteur unique suffit à cette communication bidirectionnelle. Ceci ne préjuge toutefois pas de l'existence ou non d'autres conducteurs ou fils électriques entre le premier et le deuxième équipement. En particulier, un système de communication à plusieurs lignes de transmission est envisageable.

Grâce à l'invention, la communication bidirectionnelle peut en effet être simultanée sur un même fil ou un même conducteur de la ligne de transmission. La largeur d'impulsion, la fréquence ou la période du signal sont modulés pour la transmission de données du premier équipement vers le deuxième équipement. Or, en même temps, le signal peut être modulé en amplitude, pour la transmission de données du deuxième équipement vers le premier équipement.

La communication du système de communication de l'invention s'apparente à une liaison de type PWM pour le transfert de données du premier équipement vers le deuxième équipement. Il s'apparente à une liaison du type UART pour le transfert de données du deuxième équipement vers le premier équipement.

La transmission des données du premier équipement vers le deuxième équipement n'est pas tributaire de l'existence de données transmises du deuxième équipement vers le premier équipement. En effet, et en l'absence de données transmises du deuxième équipement vers le premier équipement, le signal de transmission n'est simplement pas modulé en amplitude.

Pareillement, et bien que le deuxième équipement utilise le signal de transmission pour en moduler l'amplitude, la transmission de données du deuxième équipement vers le premier équipement n'est pas tributaire de la transmission de données du premier équipement vers le deuxième équipement. En effet, le premier équipement peut être configuré pour produire un signal de transmission non modulé en l'absence de donnée à transmettre. Il s'agit, par exemple, d'un signal fixe dont la largeur des états hauts et bas successifs est constante. Ce signal est alors utilisé pour la modulation d'amplitude et pour la synchronisation de la communication du deuxième équipement vers le premier équipement.

Comme indiqué ci-dessus, les moyens de transmission de données du premier équipement vers le deuxième équipement comportent un premier modulateur apte à générer le signal de transmission, modulé en largeur d'impulsion, en fonction d'au moins une première donnée numérique, le premier modulateur étant situé dans le premier équipement. Les moyens de transmission comportent aussi un premier démodulateur apte à extraire ladite donnée numérique du signal de transmission, le démodulateur étant situé dans le deuxième équipement.

De manière avantageuse le premier modulateur peut être conçu pour coder simultanément deux informations sur le signal de transmission. Par exemple, le premier modulateur peut être conçu pour coder la première donnée numérique sur un état haut de l'impulsion du signal de transmission, et de coder une deuxième donnée numérique sur l'état bas des impulsions du signal de transmission. Dans ce cas, la durée de l'état haut et la durée de l'état bas peuvent correspondre, à la première et à la deuxième donnée.

Par ailleurs, le premier modulateur est conçu pour coder une première donnée numérique sur l'un parmi un état haut et un état bas du signal de transmission, et de coder la deuxième donnée numérique sur une période, respectivement sur une fréquence de modulation du signal de transmission. En d'autres termes, la durée de la période, ou la valeur de la fréquence de modulation, peuvent être corrélés à des valeurs de données à transmettre. A titre d'exemple, une première valeur de la période de modulation, ou de la fréquence, peut correspondre à une donnée reflétant un premier état, et une deuxième valeur de la période de modulation, ou de la fréquence, peut correspondre à une donnée reflétant un deuxième état.

Il convient de noter que le codage d'une donnée sur la période de modulation revient au codage de la donnée sur la fréquence de modulation du signal de transmission. A plusieurs fréquences de modulation différentes peuvent correspondre soit plusieurs données différentes à transmettre, soit plusieurs valeurs d'une même donnée.

On entend par période de modulation du signal de transmission, la durée d'une alternance formée d'un état haut et d'un état bas consécutif du signal. La fréquence de modulation est l'inverse de la période de modulation.

Par ailleurs, les expressions « première donnée » et « deuxième donnée » visent à distinguer différentes données échangées mais ne signifient pas que la donnée est unique. Il est entendu que les modulateurs transmettent de nombreuses données. La première et la deuxième donnée peuvent ainsi être comprises comme des flots de données.

Les moyens de transmission de données du deuxième équipement vers le premier équipement peuvent comporter un deuxième modulateur apte à modifier l'amplitude du signal de transmission en fonction d'une troisième donnée numérique. Le deuxième modulateur est situé dans le deuxième équipement. Dans ce cas, un deuxième démodulateur est prévu pour extraire la troisième donnée numérique du signa! de transmission, le deuxième démodulateur étant situé dans le premier équipement.

A l'instar des expressions « première donnée » et « deuxième donnée », l'expression « troisième donnée » ne désigne pas nécessairement une donnée unique mais plutôt un flot de données.

Dans une réalisation particulière du deuxième modulateur, celui-ci peut comporter une résistance de charge en série avec un interrupteur de commande, par exemple un transistor, synchronisé avec les signaux des première et deuxième données, et piloté en fonction de la troisième donnée numérique. La résistance de charge est connectée à la ligne de transmission pour en modifier la charge. Selon que l'interrupteur est fermé ou ouvert, la résistance de charge se trouve reliée ou non à une tension de référence, par exemple une tension de masse. Lorsqu'elle est reliée à la tension de référence, c'est-à-dire lorsque l'interrupteur est fermé, la résistance de charge se trouve en série avec une résistance de la ligne de transmission. Elle forme, avec cette résistance série, un pont diviseur qui atténue le signal de transmission. Lorsque l'interrupteur est ouvert, la résistance de charge est flottante et n'atténue pas le signal de transmission.

De manière préférentielle, la fréquence du signal de transmission du premier équipement vers le deuxième équipement, qui peut être variable, est supérieure ou égale à une fréquence de modulation de son amplitude.

Par ailleurs, la modulation en amplitude du signal de transmission peut être synchronisée sur le signal de transmission. En particulier, elle peut être synchronisée sur des fronts montants ou descendants du signal de transmission.

Afin d'augmenter l'immunité du système de communication aux perturbations électromagnétiques, celui-ci peut comporter un filtre passe-bas connecté à la ligne de transmission. La fréquence de coupure du filtre est ajustée de préférence pour être supérieure à la fréquence du signal de transmission, et inférieure à une fréquence cible pour des perturbations électromagnétiques à éliminer.

Dans une application particulière de l'invention, dans le domaine de l'outillage, le premier équipement peut être l'un parmi un outil à moteur électrique et une unité d'alimentation distante associée à l'outil. Dans ce cas, le second équipement est l'autre parmi l'outil électrique et l'unité d'alimentation distante associée à l'outil.

Les commandes allant de l'outil vers l'unité d'alimentation sont généralement des commandes prioritaires et rapides dans la mesure où elles concernent le fonctionnent de l'outil ou des fonctions de sécurité. A l'inverse, les commandes de l'unité d'alimentation vers l'outil sont généralement de priorité inférieure ou plus lentes. Il est ainsi préférable de réserver la communication par modulation de largeur d'amplitude pour le transfert de données de l'outil vers l'unité d'alimentation et de réserver la communication par modulation d'amplitude pour le transfert de données de l'unité d'alimentation vers l'outil.

Dans une application particulière de l'invention, le premier équipement peut être de préférence un outil électrique portable choisi parmi un sécateur, une cisaille, une tronçonneuse, un taille-haie, un souffleur et une débroussailleuse. Le deuxième équipement est alors une unité d'alimentation électrique distante reliée à l'outil par un câble à conducteurs multiples. Le câble comprend notamment un unique conducteur formant la ligne de transmission. L'unité d'alimentation peut être spécifique à un outil donné ou peut être adaptée à différents outils.

Dans une configuration particulière, l'outil peut présenter une première interface de commande reliée au premier modulateur, pour transmettre des données de commande de l'outil vers l'unité d'alimentation. La première interface comprend par exemple une gâchette ou une manette. L'unité d'alimentation peut comporter une carte électronique pour commander par exemple un courant d'alimentation du moteur en fonction des données de commande, d'autres paramètres tels que la température, ou des informations vers l'utilisateur par l'intermédiaire d'un afficheur ou d'un avertisseur sonore tels que la configuration de fonctionnement de l'outil. La carte électronique est à cet effet reliée au premier démodulateur pour recevoir les données de commande de l'outil. Dans le cas particulier où l'outil est un sécateur électrique, la carte électronique est aussi reliée au moteur par le câble à conducteurs multiples pour fournir au moteur un courant d'alimentation correspondant.

Dans une telle configuration, le câble comprend, par exemple, la ligne de transmission du signal, deux fils pour l'alimentation électrique de la première interface de commande, et des fils pour l'alimentation électrique du moteur. Dans le cas d'un moteur triphasé, il s'agit de trois fils d'alimentation.

Tout comme l'outil, l'unité d'alimentation peut être pourvue d'une interface de commande. L'outil et l'unité d'alimentation peuvent aussi être pourvus d'une interface de signalisation. L'interface de signalisation peut comporter un voyant ou un indicateur sonore.

Ainsi, le système de communication peut aussi être utilisé pour transmettre des données de signalisation ou des données d'état, destinées aux interfaces de signalisation. Le système de communication peut transmettre, par exemple, des données reflétant un état de charge de l'unité d'alimentation, une température de l'unité d'alimentation ou de l'outil, un état d'usure ou une information de maintenance de l'outil, un mode de fonctionnement de l'outil, une situation de blocage d'un organe de coupe, ou encore une consigne de mise en sécurité de l'outil.

Typiquement dans une application de l'invention pour la communication entre un sécateur et une unité d'alimentation du sécateur, la première interface, par exemple une gâchette, peut être configurée pour la saisie d'au moins l'une parmi une commande de d'amplitude de déplacement d'une lame mobile et un sens de déplacement de la lame. La deuxième interface, de l'unité d'alimentation peut être configurée pour la saisie d'au moins l'une parmi une commande de mise sous tension du sécateur et une commande de changement de mode de fonctionnement.

Le changement de mode de fonctionnement peut concerner en particulier le mouvement de la lame. Il peut s'agir en particulier d'un mouvement proportionnel ou un mouvement à fermeture brusque de la lame. Le mode de fonctionnement peut aussi déterminer le choix d'une consigne d'ouverture maximum des lames, c'est-à-dire une amplitude de pivotement maximum d'une lame mobile par rapport à une lame fixe.

L'invention concerne également un procédé de communication entre un premier équipement et un deuxième équipement relié au premier équipement par une ligne de transmission à conducteur unique. Selon le procédé, on transmet des données du premier équipement vers le deuxième équipement par une modulation de largeur d'impulsions d'un signal de transmission émis sur la ligne de transmission et par modulation de la fréquence du signai de transmission. On transmet également des données du deuxième équipement vers le premier équipement par modulation en amplitude dudit signal de transmission.

La transmission des données du deuxième équipement vers le premier équipement est possible de manière simultanée à la transmission de données du premier équipement vers le deuxième équipement.

La modulation de la fréquence du signal de transmission revient à moduler la période du signal, la période étant formée par un état haut et un état bas des impulsions.

D'autres caractéristiques et avantages de l'invention ressortent de la description qui suit en référence aux figures des dessins. Cette description est donnée à titre purement illustratif et non limitatif.

### Brève description des figures

La figure 1 est une représentation schématique d'un système de communication bidirectionnel entre deux équipements, conforme à l'invention.
La figure 2 est une représentation graphique d'un exemple de signal de transmission produit par un modulateur du système de communication de la figure 1.
La figure 3 est une représentation graphique d'un signal numérique correspondant à une troisième donnée à transmettre.
La figure 4 montre un exemple de modulation en amplitude du signal de transmission de la figure 2 en fonction du signal de la figure 3.
La figure 5 est une représentation schématique d'une variante du système de communication de la figure 1.
La figure 6 est une représentation schématique d'un signal produit par un modulateur du système de communication de la figure 5,
La figure 7 est une représentation graphique d'un signal numérique correspondant à une donnée à transmettre et utilisée pour moduler le signal de la figure 6.
La figure 8 est une représentation schématique d'un système de communication conforme à l'invention et appliqué à un sécateur électrique à alimentation distante.

### Description détaillée de modes de mise en oeuvre de l'invention

Dans la description qui suit des parties identiques, ou similaires des différentes figures sont repérées avec les mêmes signes de référence.

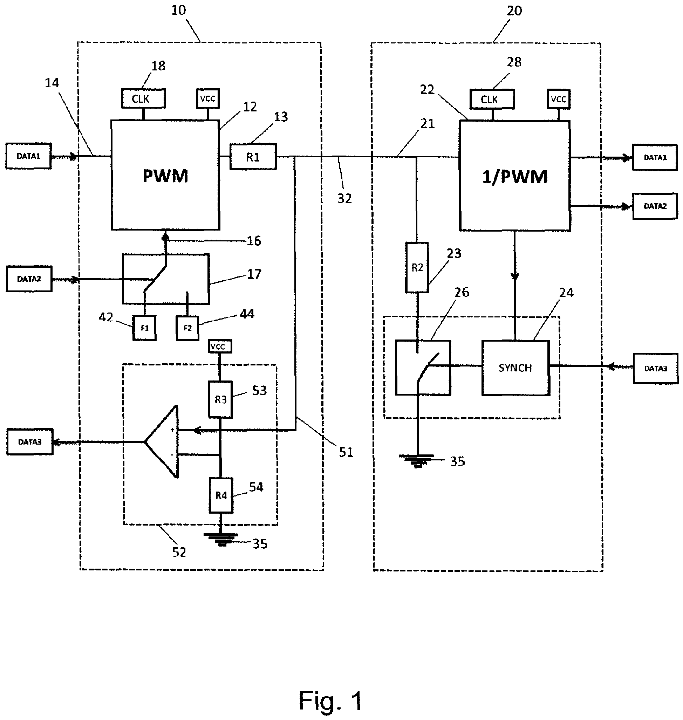

Le système de communication de la figure 1 comprend un premier équipement 10 et un deuxième équipement 20 reliés par un câble à conducteurs multiples. Le câble comprend un fil conducteur 32 qui constitue une ligne de transmission de signaux. Le câble peut comporter également des fils d'alimentation électrique 34, 35 pour des cartes électroniques des premier et deuxième équipements 10, 20. Ces fils d'alimentation ne sont pas représentés de manière détaillée sur la figue 1. Les références 34 et 35 indiquent simplement des bornes à une tension d'alimentation continue Vcc, par exemple 5 Volts, et une tension de référence (masse), par exemple 0 Volts. Chaque équipement comporte un modulateur et un démodulateur.

Le premier équipement 10 comprend un premier modulateur 12 dont la sortie est reliée à la ligne de transmission de signaux 32. Dans l'exemple de la figure 1, le premier modulateur est relié à la ligne de transmission par l'intermédiaire d'une résistance série 13. La ligne de transmission 32 est également reliée à un premier démodulateur 22 du deuxième équipement 20.

Le premier modulateur 12 présente deux entrées de données à transmettre. Une première entrée 14 reçoit une première donnée à transmettre. Dans l'exemple illustré la première donnée est une donnée numérique DATA 1 correspondant à une consigne de vitesse du moteur. La valeur de la consigne est comprise par exemple entre 1 et 700.

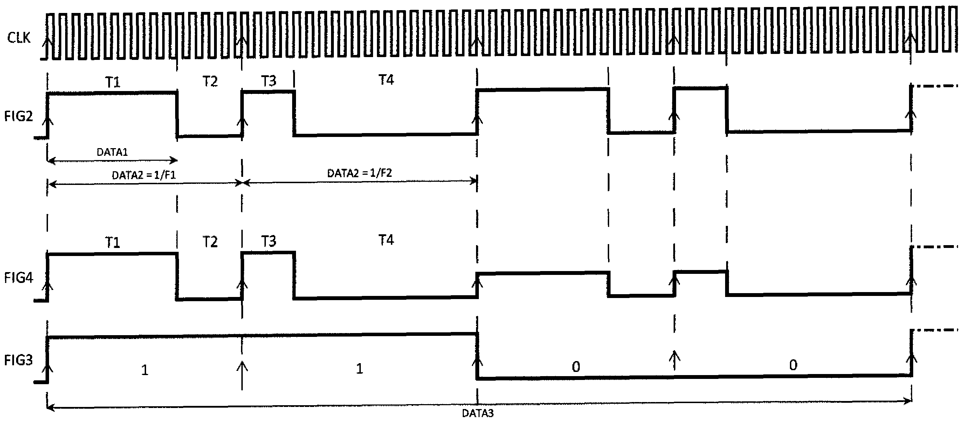

Le modulateur convertit cette donnée en un signal de transmission correspondant à la représentation de la figure 2. La figue 2 indique en ordonnée l'amplitude du signal en fonction du temps. Le temps est indiqué en abscisse. La figure 2 montre que le signal présente une alternance avec un premier état haut T1 dont la largeur, c'est-à-dire la durée correspond à la consigne de vitesse. Plus précisément la largeur de l'état haut T1, et donc sa durée, correspond au produit de la consigne de vitesse par une durée unitaire donnée par une horloge de cadencement 18. Les impulsions de l'horloge de cadencement sont indiquées en partie haute de la figure 2. En raison d'une forte disparité entre la fréquence de cadencement et celle de la modulation du signal, les impulsions de l'horloge de cadencement sont indiquées en échelle temporelle libre.

Par exemple, pour une horloge cadencée à une fréquence de 1MHz et une fréquence PWM de 1kHz, une valeur numérique DATA 1 de 250 peut être convertie en un état haut T1 dont la durée est égale à 250 microsecondes. L'état haut est suivi d'un état bas T2 qui aura alors une durée de 750 microsecondes. Si la fréquence de modulation en largeur d'impulsions est de 1,1 Khz, la durée de l'état haut T1, qui correspond à la donnée DATA 1 est toujours de 250 microsecondes. En revanche, la durée de l'état bas T2 est dans ce cas réduite à 659 microsecondes. En effet, en raison d'une fréquence plus élevée, la période formée par la succession d'un état haut et d'un état bas est plus courte. Elle est en effet de 1000 microsecondes dans le cas d'une fréquence PWM de 1kHz et de 909 microsecondes dans le cas d'une fréquence de PWM de 1,1kHz.

Par retour à la figure 1, on observe que le premier modulateur 12 présente une deuxième entrée 16 à laquelle est appliquée une deuxième donnée DATA 2. Il s'agit, dans l'exemple illustré, d'une donnée numérique binaire qui ne peut prendre que deux valeurs 0 ou 1. La donnée DATA2 reflète, par exemple, un sens de rotation d'un moteur. Dans une application particulière de l'invention à un sécateur électrique, cette commande peut correspondre, par exemple, à un mouvement d'ouverture ou de fermeture d'une lame mobile par rapport à une lame fixe.

L'entrée 16 et donc la consigne DATA 2, est appliquée à un commutateur électronique 17 capable de relier au modulateur un oscillateur 42 délivrant une fréquence d'oscillation F1, par exemple de 1KHz, ou un oscillateur 44, délivrant une fréquence d'oscillation F2, par exemple de 1,1 KHz. Il convient de noter que les oscillateurs 42 et 44 peuvent être remplacés par un unique oscillateur dont on fait varier la consigne d'oscillation à partir du signal DATA 2.

Le premier modulateur 12 utilise la consigne de l'un des oscillateurs 42 et 44, en fonction de la valeur DATA2, pour modifier la fréquence, ou la période, du signal de transmission.

Comme le montre la figure 2, la période de la première alternance comprenant l'état haut T1 et l'état bas T2 est de 1/F1. Ceci signifie que la première alternance du signal produit par le modulateur est à la fréquence F1. Une deuxième alternance comprend un état haut T3, de largeur différente de l'état haut T1, et un état bas T4. Elle présente dans cet exemple une fréquence F2 et une période 1/F2. Ainsi, grâce au premier modulateur deux informations peuvent être transmises de manière concomitante du premier équipement 10 vers le deuxième équipement 20. L'une des informations est codée sur la largeur ou la durée des états hauts et la deuxième information est codée sur la fréquence du signal.

Dans le cas de la figure 2 une première consigne de vitesse (T1) est transmise par exemple pour l'ouverture de la lame (F1) et une deuxième consigne de vitesse (T3) est transmise pour la fermeture de la lame (F2).

On peut noter que plusieurs états hauts successifs peuvent être transmis à la même fréquence, par exemple la fréquence F1. En effet la fréquence F1 est maintenue tant que le signal DATA2 est à l'une de ses valeurs possibles, par exemple la valeur 1. Elle passe à F2 pour sa seconde valeur, 0 en l'occurrence. On peut encore noter qu'il est possible de coder la première information, ou la donnée DATA1, non pas sur la largeur des états hauts du signal mais sur la largeur ou la durée des états bas. Enfin on peut noter que le commutateur 17 peut être conçu pour choisir une fréquence parmi une gamme de fréquences plus grande (supérieure à 2). Ceci permet de coder, en plus du sens de déplacement de la lame d'autres informations, telles que des consignes de limitation du courant du moteur, des consignes de sécurité etc. Une gamme plus grande de fréquences permet aussi de coder des données DATA2 plus complexes qu'une donnée simplement binaire. Il est possible, par exemple, de coder la donnée DATA 2 sur un octet. Selon une autre possibilité, il est encore possible de transmettre une pluralité de données distinctes, chacune ayant une valeur à l'état haut et respectivement une valeur à l'état bas. Il s'agit, par exemple, de données d'état de marche ou d'arrêt, ou de données d'allumage ou d'extinction d'un voyant lumineux.

Par retour à la figure 1, on peut noter que le signal de transmission est reçu en une entrée 21 du premier démodulateur 22. Le premier démodulateur 22 est relié à une horloge de cadencement 28 du deuxième équipement 20. L'horloge de cadencement 28 du deuxième équipement n'est pas nécessairement synchronisée avec l'horloge 18 du premier équipement 10, mais présente de préférence une même fréquence de cadencement. La fréquence de la deuxième horloge de cadencement 28 est par exemple de 1 MHz. Le démodulateur 22 peut être conçu pour déterminer la largeur de l'état haut, ou sa durée, en comptant le nombre d'impulsions de la seconde horloge 28 pendant l'état haut du signal appliqué à son entrée 21. Le début et la fin du décompte des impulsions d'horloge sont donnés, par exemple par le front montant et le front descendant de l'impulsion.

L'état haut T1 a une durée qui correspond au produit de la valeur DATA 1 par un nombre d'impulsions de la première horloge 18. Ainsi, le décompte établit la valeur DATA1 qui est ainsi restituée. On comprend que la restitution de la valeur est d'autant plus aisée que les deux horloges sont cadencées à la même fréquence.

Une altération du signal dû à une perturbation électromagnétique, ou à un filtrage du signal est susceptible d'affecter légèrement la durée de l'état haut. En revanche cette altération, sur quelques impulsions d'horloge n'affecte que très peu la valeur DATA 1. La valeur de la donnée transmise est d'autant moins affectée que la fréquence des horloges de cadencement 18, 28, est élevée en comparaison avec la fréquence de modulation du signal, en l'occurrence F1 ou F2.

Le démodulateur peut aussi déterminer la période du signal 1/F1 ou 1/F2, et donc la fréquence F1 et F2 en comptant le nombre d'impulsions de l'horloge de cadencement qui correspond à une alternance d'un état haut et d'un état bas soit T1+T2 ou T3+T4. Ceci permet de restituer la deuxième donnée DATA 2. Le décompte des impulsions peut alors être fait entre un front montant et le front montant suivant des impulsions.

Les données DATA1 et DATA2 peuvent être acheminées vers une carte électronique ou un microprocesseur du deuxième équipement 20.

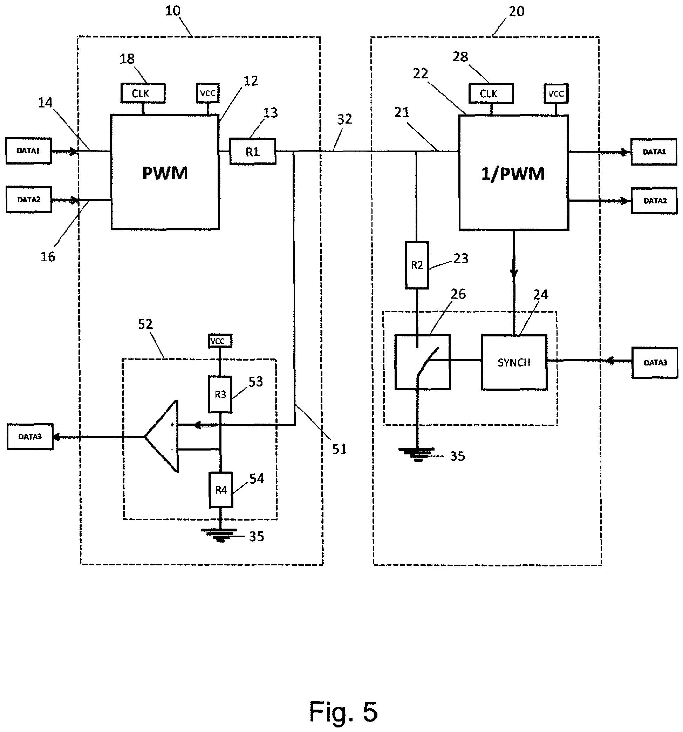

La carte électronique, ou le microprocesseur, non représentés sur la figure 1, sont également susceptibles de produire des données. Il s'agit, par exemple, d'une troisième donnée ou information DATA3, qui doit être transmise du deuxième équipement 20 vers le premier équipement 10. Dans l'exemple illustré, la donnée DATA3 est une valeur binaire 1100 qui correspond à un signal série tel que représenté par la figure 3. Le signal de la figure 3 présente deux états hauts, correspondant à la valeur 1, indiquée ordonnée suivis par deux états bas correspondant à la valeur 0.

La troisième donnée DATA 3 est appliquée, par l'intermédiaire d'une unité de synchronisation 24, à l'entrée d'un deuxième modulateur 26. Le deuxième modulateur 26 fait partie du deuxième équipement 20.

Le signal de la figure 3, reflétant la donnée DATA 3, est appliqué plus précisément à la grille ou à la base d'un transistor qui forme un interrupteur du deuxième modulateur 26.

On peut noter, sur la figure 3, que le signal correspondant à la donnée DATA 3 est synchronisé sur le signal de transmission. Il est, par exemple, synchronisé sur un front montant du signal de transmission, c'est-à-dire sur un passage d'un état bas à un état haut. La synchronisation est effectuée par l'unité de synchronisation 24 cadencée par le premier démodulateur 22.

Ainsi pour une valeur 1, ou un état haut du signal de la figure 3, le transistor est dans un état ouvert et le signal de transmission n'est pas affecté. En revanche pour une valeur 0, le transistor devient conducteur et relie la ligne de transmission 32 à la masse 35 par l'intermédiaire d'une résistance de charge 23. La résistance de charge 23, forme avec la résistance série 13, évoquée plus haut, un pont diviseur qui atténue alors le signal présent sur la ligne de transmission.

Le signal de transmission atténué se trouve également sur l'entrée 21 du premier démodulateur 22. Toutefois l'atténuation n'affecte ni la largeur ni la durée des états hauts T1 et T3. Il n'affecte pas davantage la largeur des états bas T2, T4. Enfin l'atténuation du signal de transmission n'affecte pas sa fréquence F1, F2 ou sa période. L'atténuation est ainsi transparente pour le premier démodulateur 22.

Selon l'état du transistor du deuxième modulateur, le signal de transmission peut présenter des états hauts à pleine tension, par exemple la tension Vcc d'alimentation, et des états hauts à une tension atténuée. La tension atténuée est, par exemple, une tension égale à Vcc*R2/(R1+R2), où R1 et R2 sont respectivement les valeur de la résistance série 13 et de la résistance de charge 23. Les états bas s'ils correspondent à la tension de référence à 0 volt (masse) ne sont pas atténués. En revanche si la tension des états bas est non nulle ils sont également atténués.

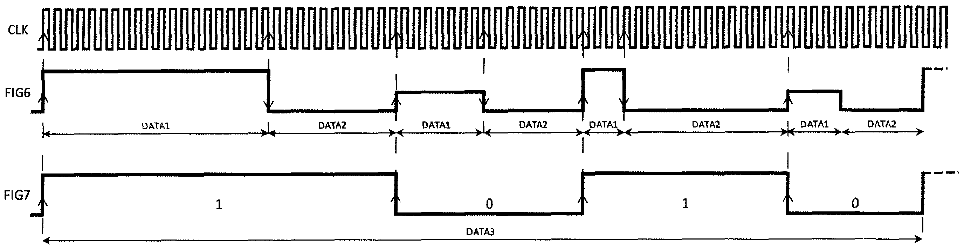

Un tel signal de transmission est représenté à la figure 4 qui indique l'amplitude des états hauts en ordonnée et le temps en abscisse. On observe que le signal de la figure 4 est également modulé en largeur d'impulsion et en fréquence, de la même manière que le signal de la figure 2 qui est libre de toute modulation en amplitude.

La ligne de transmission 32 est encore reliée à une entrée 51 d'un deuxième démodulateur 52 du premier équipement 10. Le deuxième démodulateur se présente sous la forme d'un comparateur à seuil.

Le comparateur à seuil présente de préférence un seuil compris entre la valeur non atténuée des états hauts et la valeur atténuée des états hauts du signal de transmission. En se référant à l'exemple ci-dessus, le seuil peut être fixé à une valeur intermédiaire entre Vcc*R2/(R1+R2) et Vcc. Le seuil du comparateur est fixé par des résistances 53 et 54 qui forment un pont diviseur entre la tension d'alimentation et la masse. Il est égal à Vcc*R4/(R3+R4), où R3 et R4 sont les valeurs des résistances 53 et 54.

Le démodulateur délivre ainsi une valeur 1 lorsque le signal de transmission est supérieur à la valeur de seuil ce qui correspond aux états hauts non atténués, et délivre une valeur 0 lorsque le signal de transmission est inférieur à la valeur de seuil, ce qui correspond aux états hauts atténués, et éventuellement aux états bas intermédiaires.

Ainsi le démodulateur transforme le signal de transmission en signal comparable à celui la figure 3, dont il est possible d'extraire la donnée numérique DATA3.

Le signal correspond, dans l'exemple illustré, à deux états hauts suivis de deux états bas et indique une valeur DATA 3 égale à 1100. Cette valeur est transmise à une carte électronique ou à un microcontrôleur du premier équipement (non représentés sur la figure 1).

On peut observer dans l'exemple décrit en référence aux figures 2 et 4 que la fréquence de la modulation en amplitude du signal de transmission est égale à celle du signal de transmission. Ceci est dû notamment au mode de synchronisation. La fréquence de modulation en amplitude peut aussi être choisie inférieure aux fréquences du signal de transmission mais toujours synchronisée à ce dernier

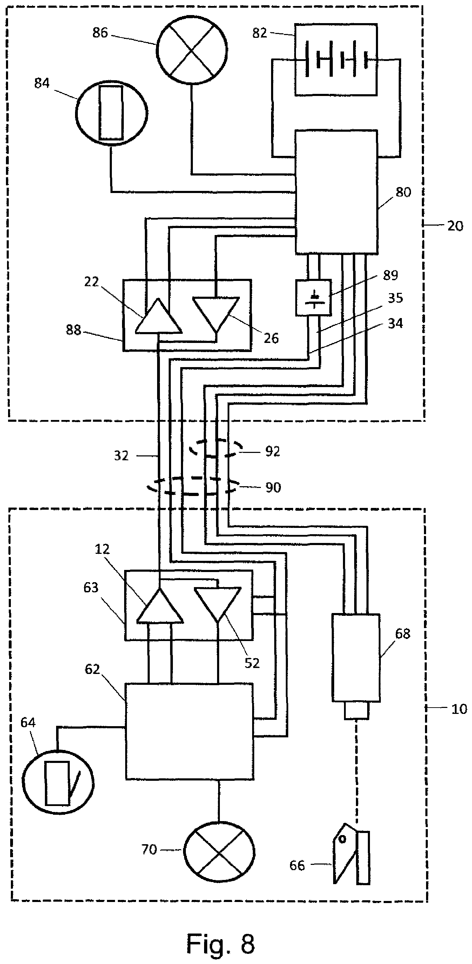

La figure 5 montre une autre possibilité de réalisation du système de communication. Le système de la figure 5 présente le même fonctionnement général que le système de la figure 1. Des composants correspondants sont repérés avec les mêmes références et on peut se reporter à la description qui précède en ce qui les concerne.

Toutefois, et à la différence du système de la figure 1, la deuxième donnée DATA2 n'est pas utilisé pour commander la sélection d'une fréquence particulière pour le signal de transmission.

En revanche, la deuxième donnée DATA 2 est appliquée à la deuxième entrée 16 du premier modulateur 12. La première donnée DATA 1 est toujours appliquée à la première entrée 14 du modulateur.

Le premier modulateur 12 utilise l'une des données, par exemple DATA1, pour commander la largeur, c'est-à-dire la durée d'un état haut d'une impulsion, et utilise l'autre donnée DATA 2 pour commander la largeur, c'est-à-dire la durée de l'état bas de l'impulsion sur une même période du signal de transmission.

Le premier modulateur 12 est cadencé par une horloge de cadencement 18. Ainsi la durée de l'état haut ou de l'état bas est un multiple de la période de cadencement. Par exemple, et comme décrit précédemment, la durée de l'état haut peut être T1=DATA1*CLK et la durée de l'état bas peut être T2= DATA2*CLK c'est-à-dire le produit de la donnée à transmettre par la valeur CLK de la période de cadencement.

A titre d'illustration, en considérant que les valeurs sont DATA1=1000 et DATA2=250, et que la fréquence de l'horloge de cadencement est de 1MHz, c'est-à-dire avec une période de 1 µs, la durée de l'état haut T1 est de 1000 µs, et la durée de l'état bas est de 250 µs.

La figure 6 représente un signal modulé en largeur d'impulsion produit par le premier modulateur du système de la figure 5. L'amplitude de l'impulsion est indiquée en ordonnée et le temps est indiqué en abscisse. Le signal présente des états hauts et des états bas dont les durées sont respectivement des multiples (DATA1, DATA2) de la période de cadencement CLK. Les impulsions de la première horloge de cadencement, qui fixent la période de cadencement, sont indiquées en échelle libre et en partie haute de la figure 6. Il convient de noter que l'amplitude du signal, par exemple l'amplitude des états hauts ne demeure pas constante dans la mesure où elle est susceptible d'être modulée par le deuxième modulateur 26 du deuxième équipement, de la façon décrite plus haut.

De manière plus précise, le signal de transmission de la figure 6 est modulé en fonction d'une donnée DATA 3 de valeur binaire 1010 représentée à la figure 7. Cette valeur est différente de la donnée DATA 3 représentée à la figure 3. On peut observer une synchronisation de la modulation en fonction de la donnée DATA3 sur les fronts montants du signal de transmission de la figure 6. Une synchronisation sur les fronts descendants serait également possible.

Par retour à la figure 5, on peut noter que le premier démodulateur 22, qui fait partie du deuxième équipement 20, délivre les données DATA1 et DATA2 à partir du signal de transmission reçu en son entrée 21. Les données sont établies en déterminant respectivement la durée des états hauts et des états bas du signal de la figure 6. Pour ce faire le démodulateur peut être configuré pour compter respectivement le nombre d'impulsions de cadencement de la deuxième horloge de cadencement 28 qui séparent un front montant et un front descendant du signal de transmission, ou qui séparent un front descendant d'un front montant du signal de transmission.

Comme indiqué précédemment, la deuxième horloge de cadencement 28 a une fréquence dans un rapport connu avec la fréquence de la première horloge de cadencement 18. De préférence les deux horloges ont la même fréquence.

La figure 8 illustre de manière schématique une application particulière du système de communication à un sécateur électrique.

Le premier équipement 10 est un sécateur électrique portable. Il comprend une carte électronique principale 62 reliée à une interface de commande 64, par exemple une gâchette actionnable par l'utilisateur pour commander l'ouverture et la fermeture de lames 66. L'ouverture et la fermeture des lames s'effectuent généralement par le pivotement d'une lame fixe par rapport à une lame mobile. Le mouvement de la lame est provoqué par un moteur 68, relié à la lame mobile par une transmission non représentée. Dans l'exemple illustré le moteur est un moteur triphasé sans balais.

La carte électronique 62 reçoit le signal d'un capteur de position de la gâchette et établit des données de commande d'ouverture ou de fermeture des lames, et le cas échéant, des données de commande d'une vitesse d'ouverture ou de fermeture. La carte électronique 62 peut aussi établir des données de commande d'une amplitude d'ouverture ou de fermeture. Il s'agit, par exemple, des données DATA 1 et DATA2 mentionnées précédemment. Ces données sont fournies à une deuxième carte électronique 63 comprenant le premier modulateur 12 et le deuxième démodulateur 52 décrits précédemment. Il convient de noter qu'une seule carte électronique principale peut être prévue pour l'ensemble des fonctions des cartes 62, 63 ci-dessus.

Le sécateur 10 comprend en outre une interface d'avertissement 70, par exemple, une ou plusieurs diodes électroluminescentes, susceptibles d'indiquer une mise sous tension, un mode de fonctionnement, un état des batteries, une situation de défaut etc.

L'interface d'avertissement 70, est pilotée par la carte électronique principale 62 en fonction de données établies par des capteurs non représentés du sécateur, ou en fonction de données fournies par le deuxième démodulateur 52, et reçues du deuxième équipement 20. Il s'agit, par exemple, des données DATA 3 mentionnées précédemment.

Le deuxième équipement 20 est une unité d'alimentation distante du sécateur susceptible d'être portée à la ceinture ou au dos. Elle comprend également une carte électronique principale 80. Cette carte a pour fonction principale d'établir les commandes en courant d'alimentation électrique du moteur 68 du sécateur. La carte électronique principale 80 de l'unité d'alimentation établit ces commandes à partir des données de commande qui lui sont fournies par le premier démodulateur. Il s'agit, par exemple, des données DATA1 et DATA2 mentionnées précédemment qui gouvernent un sens, une vitesse ou une durée de rotation du moteur 68.

La carte électronique principale 80 a également pour fonction de fournir les courants d'alimentation pour le moteur 68 à partir de l'énergie fournie par la batterie d'accumulateurs principale 82.

La carte électronique 80 peut encore recevoir des commandes d'une deuxième interface de commande 84, propre à l'unité d'alimentation. Il s'agit par exemple d'une interface pour la commande d'une mise sous tension générale, pour une commande de changement de mode de fonctionnement du sécateur. La carte électronique 80 utilise ces commandes pour piloter le moteur, ou les convertit en données à destination du sécateur. Par exemple, la carte électronique peut établir une donnée commandant l'allumage d'une diode électroluminescente du sécateur indicatrice de la mise sous tension générale, ou indicatrice d'une consigne d'ouverture des lames plus grande. La carte électronique 80 est à cet effet reliée au deuxième modulateur 26. Les données transmises au sécateur sont, par exemple, les données DATA 3 mentionnées précédemment.

La carte électronique 80 peut encore piloter une interface d'avertissement 86 propre également à l'unité d'alimentation 20. L'interface 86 comprend, par exemple, un afficheur, des diodes électroluminescentes et/ou un indicateur sonore. L'interface d'avertissement, par exemple un indicateur sonore, peut avertir l'utilisateur de l'état des commandes, de l'état de la batterie, du mode de fonctionnement, ou de toute information utile au fonctionnement. Une carte électronique 88, distincte de la carte électronique principale 80, peut être prévue pour le premier démodulateur 22 et le deuxième modulateur 26. Ces fonctions peuvent aussi être intégrées à la carte électronique principale 80.

La référence 89 indique un accumulateur ou une batterie d'accumulateurs secondaires, qui peut être distincte ou non de la batterie d'accumulateurs principale 82, et qui est destinée à alimenter les cartes électroniques et les interfaces et divers composants du sécateur 10 et de l'unité d'alimentation 20.

Un câble 90 relie le premier équipement 10, c'est-à-dire le sécateur, et le deuxième équipement 20, c'est-à-dire l'unité d'alimentation. Le câble est de préférence relié au premier et au deuxième équipement par des connecteurs non représentés. Il s'agit d'un câble à conducteurs multiples, comprenant plusieurs fils de liaison.

Dans l'exemple illustré, le câble 90 comprend un fil conducteur formant la ligne 32 de transmission des signaux déjà mentionnée. Il comprend encore trois fils conducteurs 92 reliant la carte électronique principale 80 au moteur 68 de manière à fournir au moteur les courants d'alimentation de ses trois phases. Enfin, le câble comprend deux fils conducteurs qui fournissent la tension d'alimentation de la carte électronique du sécateur, par exemple 5 Volts. Il s'agit des fils 34, 35, mentionnés en référence à la figure 1, qui constituent le potentiel de masse et le potentiel Vcc.

## Revendications

1. Système de communication bidirectionnel entre un premier équipement (10) et un deuxième équipement (20) relié au premier équipement par une ligne (32) de transmission à conducteur unique, comprenant des moyens (12,22) de transmission de données (DATA1, DATA2) du premier équipement vers le deuxième équipement par une modulation de la largeur d'impulsions d'un signal de transmission, émis sur la ligne de transmission, et des moyens (26,52) de transmission de données (DATA3) du deuxième équipement vers le premier équipement par une modulation en amplitude dudit signal de transmission dans lequel les moyens de transmission de données du premier équipement vers le deuxième équipement comportent un premier modulateur (12) apte à générer le signal de transmission, modulé en largeur d'impulsion, en fonction d'au moins une première donnée numérique (DATA1, DATA2), le premier modulateur étant situé dans le premier équipement (10), **caractérisé en ce que** le premier modulateur est apte à coder une première donnée (DATA1) numérique par modulation de la largeur de l'un parmi un état haut (T1) et un état bas (T2) du signal de transmission, et de coder une deuxième donnée numérique (DATA2) par modulation d'une période, respectivement une fréquence, du signal de transmission.

2. Système selon la revendication 1, dans lequel les moyens de transmission comprennent en outre un premier démodulateur (22) apte à extraire ladite donnée numérique (DATA1, DATA2) du signal de transmission, le démodulateur (22) étant situé dans le deuxième équipement (20).

3. Système selon la revendication 1, dans lequel le premier modulateur (12) est apte à coder la première donnée numérique (DATA1) par modulation de la largeur d'un état haut (T1) du signal de transmission et de coder une deuxième donnée numérique (DATA2) par modulation de la largeur d'un état bas (T2) du signal de transmission.

4. Système selon l'une des revendications précédentes, dans lequel les moyens de transmission de données du deuxième équipement vers le premier équipement comportent un deuxième modulateur (26), apte à modifier l'amplitude du signal de transmission en fonction d'une troisième donnée numérique (DATA3), le deuxième modulateur (26) étant situé dans le deuxième équipement (20), les moyens de transmission comprenant en outre un deuxième démodulateur (52) pour extraire ladite troisième donnée numérique (DATA3) du signal de transmission, le deuxième démodulateur (52) étant situé dans le premier équipement (10).

5. Système selon la revendication 4, dans lequel le deuxième modulateur (26) comprend une résistance de charge (23) de la ligne de transmission en série avec un transistor de commande, formant interrupteur, et piloté en fonction de la troisième donnée numérique.

6. Système selon l'une des revendications précédentes, dans lequel le signal de transmission présente une fréquence supérieure ou égale à une fréquence de modulation en amplitude du signal de transmission, et de préférence supérieure à 10 fois la fréquence de modulation en amplitude.

7. Système selon l'une quelconque des revendications précédentes comprenant une unité de synchronisation (24) pour synchroniser la modulation en amplitude du signal de transmission sur le signal de transmission.

8. Système selon l'une quelconque des revendication précédentes dans lequel le premier équipement est l'un parmi un outil à moteur électrique (68) et une unité d'alimentation distante associée à l'outil, et le second équipement est l'autre parmi l'outil électrique et l'unité d'alimentation distante associée à l'outil.

9. Système selon la revendication 8, dans lequel le premier équipement (10) est un outil à moteur électrique portable choisi parmi un sécateur, une cisaille, une tronçonneuse, un taille-haie, un souffleur et une débroussailleuse, et dans lequel le deuxième équipement (20) est une unité d'alimentation électrique distante reliée à l'outil par un câble (90) à conducteurs multiples, le câble comprenant un conducteur formant la ligne de transmission (32).

10. Système selon la revendication 9 dans lequel l'outil présente une première interface (64) de commande, reliée au premier modulateur(12) pour transmettre des données de commande à l'unité d'alimentation, et dans lequel l'unité d'alimentation comprend une carte électronique (80) reliée au premier démodulateur (22) pour recevoir les données de commande, la carte électronique étant configurée pour commander au moins un courant d'alimentation pour le moteur électrique (68) en fonction des données de commande, la carte étant en outre reliée au moteur (80) par le câble (90, 92) à conducteur multiples pour fournir au moteur le courant d'alimentation.

11. Système selon la revendication 10, utilisé pour transmettre au moins l'un parmi des données correspondant à une action sur la première interface (64) de commande de l'outil (10) et des données correspondant à une action sur une deuxième interface de commande (84) de l'unité d'alimentation (20).

12. Système selon l'une quelconque des revendications 9 à 11, dans lequel le câble (90) à conducteurs multiples comprend en outre deux fils (34, 35) pour l'alimentation électrique d'au moins une carte électronique (68, 63) du premier équipement (10).

13. Système selon l'une quelconque des revendications 9 à 12, dans lequel le câble (90) à conducteurs multiples comprend en outre trois fils conducteurs (92) pour l'alimentation électrique du moteur.

14. Système selon la revendication 11, pour l'échange de signaux entre un sécateur et une unité d'alimentation du sécateur, dans lequel la première interface (64) est configurée pour la saisie d'au moins l'une parmi une commande de d'amplitude de déplacement d'une lame (66) du sécateur et une commande de sens de déplacement de la lame, et dans lequel la deuxième interface (84) est configurée pour la saisie d'au moins l'une parmi une commande de mise sous tension et une commande de changement de mode de fonctionnement du sécateur.

15. Procédé de communication entre un premier équipement (10) et un deuxième équipement (20) relié au premier équipement par une ligne de transmission (32) à conducteur unique, dans lequel on transmet des données (DATA1, DATA2) du premier équipement (10) vers le deuxième équipement (20) par une modulation de la largeur d'impulsions d'un signal de transmission émis sur la ligne de transmission, et dans lequel on transmet des données du deuxième équipement (20) vers le premier équipement (10) par une modulation en amplitude dudit signal de transmission et dans lequel on transmet en outre des données (DATA2) du premier équipement (10) vers le deuxième équipement (20) par modulation de la fréquence du signal de transmission.

## Patentansprüche

1. System zur bidirektionalen Kommunikation zwischen einer ersten Vorrichtung (10) und einer zweiten Vorrichtung (20), die mit der ersten Vorrichtung über eine einadrige Übertragungsleitung (32) verbunden ist, umfassend Mittel (12, 22) zur Übertragung von Daten (DATA1, DATA2) von der ersten Vorrichtung an die zweite Vorrichtung durch eine Pulsweitenmodulation eines über die Übertragungsleitung gesendeten Übertragungssignals und Mittel (26, 52) zur Übertragung von Daten (DATA3) von der zweiten Vorrichtung an die erste Vorrichtung durch eine Amplitudenmodulation des Übertragungssignals, wobei die Mittel zur Übertragung von Daten von der ersten Vorrichtung an die zweite Vorrichtung einen ersten Modulator (12) umfassen, der dazu ausgelegt ist, das pulsweitenmodullerte Übertragungssignal auf Grundlage von mindestens ersten digitalen Daten (DATA1, DATA2) zu erzeugen, wobei der erste Modulator in der ersten Vorrichtung (10) angeordnet ist, **dadurch gekennzeichnet, dass** der erste Modulator dazu ausgelegt ist, erste digitale Daten (DATA1) durch Modulation der Weite von entweder einem hohen Zustand (T1) oder einem niedrigen Zustand (T2) des Übertragungssignals zu codieren und zweite digitale Daten (DATA2) durch Modulation einer Periode bzw. einer Frequenz des Übertragungssignals zu codieren.

2. System nach Anspruch 1, wobei die Übertragungsmittel ferner einen ersten Demodulator (22) umfassen, der dazu ausgelegt ist, die digitalen Daten (DATA1, DATA2) aus dem Übertragungssignal zu extrahieren, wobei der Demodulator (22) in der zweiten Vorrichtung (20) angeordnet ist.

3. System nach Anspruch 1, wobei der erste Modulator (12) dazu ausgelegt ist, die ersten digitalen Daten (DATA1) durch Modulation der Weite eines hohen Zustands (T1) des Übertragungssignals zu codieren und zweite digitale Daten (DATA2) durch Modulation der Weite eines niedrigen Zustands (T2) des Übertragungssignals zu codieren.

4. System nach einem der vorhergehenden Ansprüche, wobei die Mittel zur Übertragung von Daten von der zweiten Vorrichtung an die erste Vorrichtung einen zweiten Modulator (26) umfassen, der dazu ausgelegt ist, die Amplitude des Übertragungssignals auf Grundlage von dritten digitalen Daten (DATA3) zu modifizieren, wobei der zweite Modulator (26) in der zweiten Vorrichtung (20) angeordnet ist, wobei die Übertragungsmittel ferner einen zweiten Demodulator (52) zum Extrahieren der dritten digitalen Daten (DATA3) aus dem Übertragungssignal umfassen, wobei der zweite Demodulator (52) in der ersten Vorrichtung (10) angeordnet ist.

5. System nach Anspruch 4, wobei der zweite Modulator (26) einen Ladewiderstand (23) der Übertragungsleitung umfasst, der mit einem Steuertransistor, der einen Schalter bildet, in Reihe geschaltet ist und auf Grundlage der dritten digitalen Daten gesteuert wird.

6. System nach einem der vorhergehenden Ansprüche, wobei das Übertragungssignal eine Frequenz aufweist, die größer gleich einer Amplitudenmodulationsfrequenz des Übertragungssignals ist und bevorzugt größer als das 10-Fache der Amplitudenmodulationsfrequenz ist.

7. System nach einem der vorhergehenden Ansprüche, umfassend eine Synchronisierungseinheit (24) zum Synchronisieren der Amplitudenmodulation des Übertragungssignals mit dem Übertragungssignal.

8. System nach einem der vorhergehenden Ansprüche, wobei es sich bei der ersten Vorrichtung um eines von einem Werkzeug mit Elektromotor (68) und einer mit dem Werkzeug verbundenen entfernten Versorgungseinheit handelt und es sich bei der zweiten Vorrichtung um das jeweils andere von dem Elektrowerkzeug und der mit dem Werkzeug verbundenen entfernten Versorgungseinheit handelt.

9. System nach Anspruch 8, wobei die erste Vorrichtung (10) ein tragbares Werkzeug mit Elektromotor ist, das ausgewählt ist aus einer Gartenschere, einer Blechschere, einer Kettensäge, einer Heckenschere, einem Laubbläser und einer Motorsense, und wobei die zweite Vorrichtung (20) eine entfernte Stromversorgungseinheit ist, die mit dem Werkzeug über ein mehradriges Kabel (90) verbunden ist, wobei das Kabel einen Leiter umfasst, der die Übertragungsleitung (32) bildet.

10. System nach Anspruch 9, wobei das Werkzeug eine erste Steuerschnittstelle (64) aufweist, die mit dem ersten Modulator (12) zum Übertragen von Steuerdaten an die Versorgungseinheit verbunden ist, und wobei die Versorgungseinheit eine Leiterplatte (80) umfasst, die mit dem ersten Demodulator (22) zum Empfangen von Steuerdaten verbunden ist, wobei die Leiterplatte dazu konfiguriert ist, mindestens einen Versorgungsstrom für den Elektromotor (68) auf Grundlage der Steuerdaten zu steuern, wobei die Leiterplatte ferner mit dem Motor (80) über das mehradrige Kabel (90, 92) verbunden ist, um dem Motor den Versorgungsstrom bereitzustellen.

11. System nach Anspruch 10, das dazu verwendet wird, mindestens eines von Daten, die einer Aktion über die erste Steuerschnittstelle (64) des Werkzeugs (10) entsprechen, und Daten, die einer Aktion über eine zweite Steuerschnittstelle (84) der Versorgungseinheit (20) entsprechen, zu übertragen.

12. System nach einem der Ansprüche 9 bis 11, wobei das mehradrige Kabel (90) ferner zwei Drähte (34, 35) zur Stromversorgung mindestens einer Leiterplatte (68, 63) der ersten Vorrichtung (10) umfasst.

13. System nach einem der Ansprüche 9 bis 12, wobei das mehradrige Kabel (90) ferner drei Leiterdrähte (92) zur Stromversorgung des Motors umfasst.

14. System nach Anspruch 11 zum Austausch von Signalen zwischen einer Gartenschere und einer Versorgungseinheit der Gartenschere, wobei die erste Schnittstelle (64) dazu konfiguriert ist, mindestens eines von einem Befehl zur Bewegungsamplitude einer Klinge (66) der Gartenschere und eines Befehls zur Bewegungsrichtung der Klinge zu erfassen, und wobei die zweite Schnittstelle (84) dazu konfiguriert ist, mindestens eines von einem Befehl zum Anlegen einer Spannung und einem Befehl zur Änderung der Betriebsart der Gartenschere zu erfassen.

15. Verfahren zur Kommunikation zwischen einer ersten Vorrichtung (10) und einer zweiten Vorrichtung (20), die mit der ersten Vorrichtung über eine einadrige Übertragungsleitung (32) verbunden ist, wobei Daten (DATA1, DATA2) von der ersten Vorrichtung (10) an die zweite Vorrichtung (20) durch eine Pulsweitenmodulation eines über die Übertragungsleitung gesendeten Übertragungssignals übertragen werden und wobei Daten von der zweiten Vorrichtung (20) an die erste Vorrichtung (10) durch eine Amplitudenmodulation des Übertragungssignals übertragen werden und wobei ferner Daten (DATA2) von der ersten Vorrichtung (10) an die zweite Vorrichtung (20) durch Modulation der Frequenz des Übertragungssignals übertragen werden.

## Claims

1. A bidirectional communication system between a first item of equipment (10) and a second item of equipment (20) connected to the first item of equipment by a single-conductor transmission line (32), comprising means (12, 22) for the transmission of data (DATA1, DATA2) from the first item of equipment towards the second item of equipment by pulse-width modulation of a transmission signal emitted on the transmission line and means (26, 52) for the transmission of data (DATA3) from the second item of equipment towards the first item of equipment by amplitude modulation of said transmission signal, in which the means for transmission of data from the first item of equipment towards the second item of equipment comprise a first modulator (12) capable of generating the pulse width-modulated transmission signal in dependence on at least a first digital datum (DATA1, DATA2), the first modulator being disposed in the first item of equipment (10), **characterised in that** the first modulator is capable of encoding a first digital datum (DATA1) by modulation of the width of one from a high state (T1) and a low state (T2) of the transmission signal and encoding a second digital datum (DATA2) by modulation of a period or a frequency respectively of the transmission signal.

2. A system according to claim 1 in which the transmission means further comprise a first demodulator (22) capable of extracting said digital datum (DATA1, DATA2) from the transmission signal, the demodulator (22) being disposed in the second item of equipment (20).

3. A system according to claim 1 in which the first modulator (12) Is capable of encoding the first digital datum (DATA1) by modulation of the width of a high state (T1) of the transmission signal and encoding a second digital datum (DATA2) by modulation of the width of a low state (T2) of the transmission signal.

4. A system according to one of the preceding claims in which means for the transmission of data from the second Item of equipment towards the first item of equipment comprise a second demodulator (26) capable of modifying the amplitude of the transmission signal in dependence on a third digital datum (DATA3), the second demodulator (26) being disposed in the second item of equipment (20), the transmission means further comprising a second demodulator (52) for extracting said third digital datum (DATA3) from the transmission signal, the second demodulator (52) being disposed in the first item of equipment (10).

5. A system according to claim 4 in which the second demodulator (26) comprises a load resistance (23) of the transmission line in series with a control transistor forming a switch and pilot-controlled in dependence on the third digital datum.

6. A system according to one of the preceding claims in which the transmission signal is of a frequency which is higher than or equal to an amplitude modulation frequency of the transmission signal, and preferably higher than 10 times the amplitude modulation frequency.

7. A system according to any one of the preceding claims comprising a synchronisation unit (24) for synchronising the amplitude modulation of the transmission signal with the transmission signal.

8. A system according to any one of the preceding claims in which the first item of equipment is one of an electric motor tool (68) and a remote power supply unit associated with the tool, and the second item of equipment is the other of the electric tool and the remote power supply unit associated with the tool.

9. A system according to claim 8 in which the first item of equipment (10) is a handheld electric motor tool selected from pruning shears, a trimmer, a chain saw, a hedge trimmer, a blower and a strimmer and in which the second item of equipment (20) Is a remote electric power supply unit connected to the tool (90) by a multi-conductor cable (90), the cable comprising a conductor forming the transmission line (32).

10. A system according to claim 9 in which the tool has a first control Interface (64) connected to the first modulator (12) for transmitting control data to the power supply unit and in which the power supply unit Includes an electronic board (80) connected to the first demodulator (22) for receiving the control data, the electronic board being configured to control at least one supply current for the electric motor (68) in dependence on the control data, the board also being connected to the motor (80) by the multi-conductor cable (90, 92) to supply the motor with the supply current.

11. A system according to claim 10 used for transmitting at least one of the data corresponding to an action on the first control interface (64) of the tool (10) and data corresponding to an action on a second control interface (84) of the power supply unit (20).

12. A system according to any one of claims 9 to 11 in which the multi-conductor cable (90) further comprises two wires (34, 35) for the electric power supply of at least one electronic board (68, 63) of the first item of equipment (10).

13. A system according to any one of claims 9 to 12 in which the multi-conductor cable (90) further comprises three conductor wires (92) for the electric power supply to the motor.

14. A system according to claim 11 for the exchange of signals between a shears and a power supply unit of the shears, In which the first interface (64) is configured to capture at least one of a control for the amplitude of displacement of a blade (66) of the shears and a control for the direction of displacement of the blade, and in which the second
interface (84) is configured for the capture of at least one of a control for switching power on and a control for changing the mode of operation of the shears.

15. A process for communicating between a first item of equipment (10) and a second item of equipment (20) connected to the first item of equipment by a single-conductor transmission line (32), in which data (DATA1, DATA2) are transmitted from the first item of equipment (10) towards the second item of equipment (20) by pulse width modulation of a transmission signal emitted on the transmission line, and in which data are transmitted from the second item of equipment (20) towards the first item of equipment (10) by amplitude modulation of the transmission signal and in which data (DATA2) are further transmitted from the first item of equipment (10) towards the second item of equipment (20) by frequency modulation of the transmission signal.
